# DEMANDE DE BREVET EUROPEEN

(11) **EP 3 912 476 A2**
(43) Date de publication de la demande: **24.11.2021**
(21) Numéro de dépôt: 21173714.3
(22) Date de dépôt: 12.05.2021
(51) Int. Cl.: A23K 10/20, A23K 10/30, A23K 40/10, A23K 50/40, A23K 50/90

(54) **NOURRITURE POUR INSECTES -METHODE D'ÉLEVAGE/NOURRISSAGE, LARVE D'INSECTE ET ALIMENT ASSOCIÉ**

(30) Priorité: 20.05.2020 FR 2005317
(71) Demandeur: Fungfeed, 59510 Hem (FR)
(72) Inventeur: BAUDIN, Victoire, 59510 HEM (FR); BUTRUILLE, Pierre, 59510 HEM (FR)
(74) Mandataire: Ipside

(57) **Abrégé**

La présente invention concerne une nourriture pour larves d'insectes et insectes, qui de manière caractéristique contient du champignon aérien et éventuellement une matière sèche. La présente demande concerne également une méthode d'élevage/nourrissage d'une larve ou d'un insecte, une larve, un procédé de fabrication d'un aliment et un aliment obtenu à partir des larves de l'invention.

## Description

### Domaine technique

La présente invention concerne une nourriture pour insectes, une méthode d'élevage/nourrissage d'insectes, une larve d'insecte pouvant être obtenue par la mise en œuvre de la méthode précitée et un aliment contenant les larves d'insectes.

### Art antérieur

Les insectes sont fréquemment utilisés pour nourrir certains animaux d'élevage comme les poissons, ou d'autres animaux tels que des animaux de compagnie comme les reptiles.

Les insectes sont donc élevés de manière intensive en tant que nourriture.

En dehors de leur consommation à l'état de larve vivante ou morte par les animaux entomophages, les insectes sont de plus en plus utilisés en tant que source de protéine sous la forme de farine dans la fabrication d'aliment.

L'élevage d'insectes à l'échelle industrielle n'est pas facile à mettre en œuvre. Les insectes sont élevés dans des conditions de température et d'humidité qui font que leur nourriture doit être sèche afin d'éviter la prolifération des bactéries, levures et mycéliums, lesquels peuvent s'avérer néfastes pour les insectes, quel que soit le stade de développement de ces derniers.

Ainsi, la publication intitulée « A review of the scientific litterature for optimal conditions for mass rearing Tenebrio molitor (Coleoptera : tenebrionidae) de Nuno Ribeiro publiée dans la revue BioOne research Evolved en 2018 (accessible via le lien suivant: http://www.bioone.org/doi/full/10.18474/JES17-67.1) indique les conditions optimales d'élevage des ténébrions. Ce document indique qu'un régime contenant 5 à 10% de levure, 80 à 85% d'hydrates de carbone et un complexe vitaminé à base de vitamines du groupe B permet un élevage optimal. S'agissant de l'apport en eau de l'alimentation, ce document indique que la larve de ténébrion grandit plus vite dans une atmosphère à 70% d'humidité relative. Néanmoins cette humidité favorise l'apparition de mites, moisissures et autres microorganismes qui sont nuisibles à l'élevage en masse. De plus, si l'eau vient à manquer, la larve de ténébrion ingère moins de nourriture et perd du poids ce qui est préjudiciable dans un élevage de masse.

Le chapitre 6 intitulé « Insect mass production technologies » rédigé par J.A. Cortes et figurant dans l'ouvrage « Insects as sustainable Food Ingrédients » publié en décembre 2016 indique que dans la nourriture humide donnée aux insectes, c'est l'activité de l'eau qui est déterminante et qui doit se situer entre 0,65 et 0,85. Ce document indique de plus, que dans la nature, les insectes obtiennent les stérols à partir du cholestérol mais que d'autres sources importantes de stérols comprennent les phytostérols et l'ergostérol du mycélium.

La publication intitulée « Feed Conversion, Survival and Development and Composition of Four Insect Species on Diets Composed of Food By-Products » de Oonincx publié dans la revue PLOS one le 23 décembre 2015 indique que pour les insectes, ce sont les protéines de l'alimentation qui sont importantes. Un régime riche en protéines réduit le ratio de conversion sur matière fraiche et augmente le taux de conversion sur matière sèche. Ce document indique que l'apport de carottes diminue le temps de développement et augmente le taux de survie des larves. Selon ce document, la levure de bière mélangée au régime protéiné agit comme un stimulant et contient des facteurs de croissance importants pour les ténébrions. Ce document indique en revanche que l'apport de carottes fraîches dans la nourriture des ténébrions diminue la matière sèche des larves. La valeur maximale de matière sèche pour la larve de ténébrion est de 41,5 g/100g (larve nourrie avec un régime sans carottes).

Les insectes et leur larves, contrairement aux mammifères sont très sensibles à la nourriture qu'ils ingèrent. Ainsi, leur composition en termes de protéines, matières grasses et glucides dépend directement de leur alimentation.

Par ailleurs ,le document KR 201600544947 A divulgue un dispositif qui permet la culture d'un champignon lequel peut être consommé par un insecte vivant et situé dans le dispositif. Le dispositif est prévu pour que l'insecte puisse seulement se nourrir du mycélium, seule partie du champignon auquel il a accès.

Le document WO 03/045161 A1 décrit un procédé de fabrication d'une nourriture pour poissons ou homards à partir de mycélium de champignon ayant poussé dans un substrat particulier. Le procédé décrit n'utilise pas la partie aérienne du champignon.

Le document JP 2005 204648 A décrit un support d'élevage d'insecte ou matelas qui permet d'éviter la prolifération des bactéries et des champignons. Ce support contient de la poudre de bambou, du charbon et de la silice.

Un but de la présente invention est de proposer une méthode d'élevage ou de nourrissage d'un insecte qui permet d'augmenter la masse d'insectes produits.

Un autre but de la présente invention est de proposer une nourriture pour insecte qui permet d'augmenter la matière sèche des larves.

Un autre but de la présente invention est de proposer une nourriture pour insecte qui permet une bonne croissance des larves et/ou des nymphes et/ou des adultes.

Un autre but de la présente invention est de proposer un aliment à base de larves d'insectes utilisable pour la nourriture du chat ou du chien, en particulier.

La présente invention concerne une nourriture pour larves d'insectes et insectes laquelle, de manière caractéristique selon l'invention contient du champignon aérien et éventuellement une matière sèche.

Avantageusement, la nourriture est constituée d'une matière sèche et de champignon. La Demanderesse a constaté que, de manière surprenante, le champignon qui contient de l'eau comme la carotte permet, contrairement à la carotte, d'augmenter la matière sèche de la larve.

Le champignon aérien peut être choisi, par exemple, parmi les champignons comestibles pour l'Homme, tels que les agarics, en particulier *Agaricus bisposrus* (champignon de Paris), le pleurote, la girolle, le cèpe, la trompette de la mort, le shiitaké, la truffe, la morille, l'oreille de Judas (*Auricularia auricula-judae*)*,* les bolets, la vesse de loup, le champignon noir (*Auricularia polytricha*) et les mélanges d'au moins deux de ces champignons. Selon l'invention, le champignon peut se trouver sous forme divisée (poudre, copeaux, morceaux) ou entier pied et chapeau dissociés ou assemblés. Il peut être sec ou frais.

La Demanderesse a de plus montré que le champignon a, qu'il soit sec ou frais, un effet bénéfique sur la prise de masse larvaire à l'instar de la levure. Il permet également qu'il soit sec ou frais d'augmenter la prise de poids des nymphes et des adultes, augmentant ainsi la survie des nymphes et les capacités reproductrices des adultes.

Avantageusement, le champignon aérien présente une activité de l'eau supérieure ou égale à 0,50, en particulier égale ou supérieure à 0,70 ou 0,80 et plus particulièrement égale ou supérieure à 0,85 et notamment égale ou supérieure à 0,90 ou 0,95 et se trouve entier ou à l'état divisé. Le champignon peut être sec ou frais et entier ou divisé. Il peut être frais sous forme de morceaux ou copeaux ou entier. Il peut être sec entier ou sous forme de copeaux ou de morceaux.

La matière sèche n'est pas limitée selon l'invention. Il peut s'agir de fragments ou brisures d'au moins une céréale, de drêches fraîches, fermentées ou déshydratées, en particulier de drêches de brasserie, d'issues de céréales, de coproduits issus de la transformation des céréales tels que par exemple, de la farine, des miettes de pain, de gâteau ou de biscuit. Il peut s'agir en particulier, de son d'au moins une céréale, en particulier de son d'avoine, de son de blé. Il peut s'agir également des mélanges d'au moins deux matières sèches précitées.

Le pourcentage massique de champignon, frais ou sec peut être égal ou supérieure à 5% et égal ou inférieure à 70%. Il est avantageusement égal ou supérieur à 40% et égal ou inférieur à 60% ; il peut être égal avantageusement à 5%, 25% ou 50%.

La présente invention concerne également une méthode de nourrissage et une méthode d'élevage qui inclut cette méthode de nourrissage. La présente invention concerne donc une méthode d'élevage/nourrissage d'insectes et de larves d'insectes, selon laquelle, on nourrit les larves et/ou lesdits insectes avec une nourriture selon l'invention, l'atmosphère entourant lesdites larves et/ou lesdits insectes présente une humidité relative égale ou supérieure à 50% et égale ou inférieure à 70% ou 80%.

De manière inattendue, même lorsque le champignon est frais et présente une activité de l'eau supérieure à 0,85, la Demanderesse a constaté que le champignon n'engendre pas de problèmes relatifs à la prolifération de levures, bactéries et autres germes préjudiciable à la croissance et à la survie des larves, nymphes ou adultes. Contrairement à un mélange carotte et champignon, le champignon seul n'engendre aucun effet délétère sur la croissance des larves, nymphes et adultes.

La présente invention concerne également une larve d'insecte entière ou en morceaux qui contient au moins 42% de matière sèche avantageusement au moins 43% et/ou présente un pourcentage massique de protéines par rapport à la matière sèche égal ou supérieur 40% et égal ou inférieur à 75% et/ou présente une densité égale ou supérieure à 295 et égale ou inférieure à 325 et/ou présente une activité de l'eau égale ou supérieure à 0,960 et égale ou inférieure à 0,981 et/ou une valeur énergétique inférieure ou égale à 210kcal/100g et/ou une teneur en glucides supérieure ou égale à 4,0 g/100g et/ou une teneur en lipides inférieure ou égale à 10g/100g et/ou une teneur en protéines égale ou inférieure à 22g/100g. Une telle larve peut être obtenue par nourrissage selon la méthode de l'invention. De telles larves sont particulièrement intéressantes en tant que nourriture ou matière première du fait de leur taux en protéine élevé et de leur teneur en eau, notamment.

**Avantageusement, la larve de l'invention contient au moins 42% de matière sèche, plus particulièrement au moins 43% de matière sèche et présente un pourcentage massique de protéines par rapport à la matière sèche égal ou supérieur 40% et égal ou inférieur à 75% et une densité égale ou supérieure à 295 et égale ou inférieure à 325 et une activité de l'eau égale ou supérieure à 0,960 et égale ou inférieure à 0,981 et une valeur énergétique inférieure ou égale** à **210 kcal/100g et une teneur en glucides supérieure ou égale à 4,0 g/100g et/ou une teneur en lipides inférieure ou égale à 10g/100g et une teneur en protéines inférieure ou égale à 22g/100g.**

La valeur énergétique peut également être supérieure ou égale à 180 kcal/100g.

La présente invention concerne également une larve pouvant être obtenue par le procédé de l'invention et contenant un pourcentage massique de matière sèche supérieur ou égal à 42% en particulier supérieur ou égale à 43% et un pourcentage massique de protéines par rapport à la matière sèche égal ou supérieur 40% à et égal ou inférieur à 75%.

Selon un mode de réalisation particulièrement avantageux, la larve de l'invention présente un pourcentage massique de matière sèche supérieur ou égal à 42%, notamment supérieur ou égal à 43% et un taux massique de protéines égal ou inférieur à 22g/100g et/ou (de préférence et) un taux massique de lipides inférieur ou égal à 10g/100g. Une telle larve permet de formuler facilement un produit fini riche en protéines et lipides de qualités avec une seule source de lipides et de protéines qu'est la larve.

Ces valeurs de matière sèche correspondent à un abattage par le froid et suivit d'une conservation par congélation à -20°C ou -30°C, comme expliqué ci-dessous.

Les valeurs précitées autres que la matière sèche sont obtenues lorsque la larve a été abattue par traitement à la vapeur puis congelée/surgelée et qu'elle est conservée congelée, en particulier à -20°C ou -30°C. La surgélation/congélation peut avoir lieu à -20°C ou -30°C.

L'abattage par le froid implique que la larve est mise dans une enceinte à -30°C pendant au moins 5 heures ou que la larve est cryogénisée à -60°C pendant 3 heures. La larve est ensuite conservée à -20°C ou -30°C. Elle est décongelée pour les analyses.

Le traitement à la vapeur s'effectue de manière à tuer toutes les larves. Il est mis en œuvre avec de la vapeur d'eau sur un volume de larve donné et de manière à ce que la prise d'eau des larves est inférieure ou égale à 20%, notamment inférieure ou égale à 15% et égale ou supérieure à 7%. Une telle prise d'eau peut être obtenue en mettant 6kg de larves avec de la vapeur d'eau à 100°C pendant 20min, par exemple.

La larve peut être choisie parmi les larves des insectes suivants : la mouche soldat noire (*Hermetia Illucens*), la mouche domestique (*Musca domestica*), le ténébrion meunier (*Tenebrio molitor*), le petit ténébrion mat (*Alphitobius diaperinus*), le grillon domestique (*Acheta domesticus*), le grillon domestique tropical (*Gryllodes sigillatus*), le grillon des steppes (*Gryllus assimilis*) et les mélanges de larves d'au moins deux desdits insectes. Avantageusement, l'insecte est le ténébrion meunier ou sa larve.

La méthode d'élevage/nourrissage concerne les mêmes larves et insectes.

La présente invention concerne également un procédé de fabrication d'un aliment selon lequel on réduit en morceaux des larves surgelées/congelées selon l'invention et l'on mélange lesdits morceaux avec une composition alimentaire laquelle contient une farine d'au moins une céréale et/ou au moins un fruit et/ou au moins un légume, notamment au moins un fruit et/ou au moins un légume surgelé(s) et l'on fait cuire ledit mélange.

Les larves de l'invention ont une composition proche de celle d'un aliment pour chat ou chien ; Leur taux de matière sèche étant plus élevé que celles nourries à la carotte, elles sont plus faciles à utiliser pour la préparation d'un aliment cuit, par exemple un aliment sec, de type croquette pour chien ou chat ou pour un aliment humide de type pâté pouvant être destiné à l'alimentation animale ou humaine. La teneur moindre en eau va faciliter la fabrication des croquettes et permettre d'ajuster facilement la texture dans le cas d'un aliment humide, notamment de type pâté(e).

Tous les ingrédients peuvent être mélangés surgelés de manière à réduire la croissance bactérienne.

Les larves de l'invention peuvent donc être utilisées pour la fabrication de croquettes par extrusion à haute température ou pour la fabrication de croquettes par extrusion à 90°C basse pression notamment avec un extrudeuse Wenger TT3630.

Les larves de l'invention peuvent également être utilisées pour la fabrication d'un aliment humide de type pâté ou de type émincés. L'aliment humide peut être obtenu par appertisation et/ou être stérilisé durant sa cuisson.

Le procédé de fabrication d'un aliment selon l'invention concerne donc tout aliment cuit, de type croquette ou de type pâté, en particulier. L'invention concerne également une farine obtenue à partir des larves et/ou insectes de l'invention.

S'agissant en particulier d'un aliment destiné à un animal de compagnie (chien ou chat), l'aliment selon l'invention a l'avantage d'être hypoallergénique car il peut ne contenir qu'une seule source de protéine animale. Cette source étant une larve d'insecte qui n'a pas ou rarement été ingérée par l'animal, il en résulte que l'aliment de l'invention a peu de risques d'être allergisant. De plus, l'utilisation d'une céréale telle que le sorgho qui est rarement utilisée dans l'alimentation animale et même humaine en Europe, en Asie et en Amérique du Nord, conforte le caractère hypoallergénique de l'aliment de l'invention.

La présente invention concerne également un aliment qui contient des larves selon l'invention et/ou au moins un fruit et/ou au moins un légume et/ou au moins une céréale. Cet aliment peut être un pâté, une pâtée pour chat ou chien ou des croquettes, des émincés, des boulettes en sauce, une purée, une mousse ou tout autre type d'aliment à destination des animaux de compagnie ou d'autres animaux carnivores ou omnivores (en particulier les NAC (nouveaux animaux de compagnie) poules, oiseaux, reptiles) pouvant éventuellement être l'humain.

L'aliment peut également contenir d'autres sources de protéines animales telles que de la viande de porc, de bœuf, de poulet, de poule, du gibier, du lapin, du poisson ou des abats tels que du foie, du poumon, du pis, de la cervelle ou un mélange de viande(s) et d'abat(s).

Le fruit n'est pas limité selon l'invention. Il peut être choisi parmi la pomme, la poire, les baies comme la myrtille, le raisin, la banane, l'abricot, la pêche, la fraise, la pastèque ou le melon. Le fruit est choisi en fonction de l'animal pour lequel est destiné l'aliment.

Le légume n'est pas limité selon l'invention. Il peut être choisi parmi la pomme de terre, la carotte, l'épinard, la salade en particulier la laitue, le chou, le céleri, le haricot vert, le petit pois, la courge, la courgette, le potiron, la citrouille et le concombre, par exemple. Le légume est choisi en fonction de l'animal pour lequel est destiné l'aliment. La céréale n'est pas limitée selon l'invention. Elle peut être choisie parmi le riz, le millet, le blé, l'orge, l'avoine, les graminées comme le sorgho le sarrasin, et les herbacées comme l'amarante.

L'aliment de l'invention et la composition alimentaire utilisée dans le procédé de fabrication d'un aliment selon l'invention peut également comprendre une légumineuse comme la lentille, le pois chiche, le pois cassé, le haricot sec blanc ou rouge. L'aliment peut également comprendre un champignon aérien comme le champignon de Paris ou le pleurote, par exemple.

Avantageusement, ledit aliment ne comporte que les larves de l'invention comme source de protéines animales.

Avantageusement, l'aliment selon l'invention est humide et il contient au moins 7%, plus particulièrement au moins à 13% en masse de protéines. L'aliment peut également contenir de 7% à 13% en masse de protéines (bornes incluses).

La présente invention concerne également l'utilisation du champignon frais ou sec entier ou sous forme divisée, en tant qu'agent d'amélioration de la croissance et/ou de la fertilité d'un insecte d'élevage et/ou en tant qu'agent permettant d'augmenter la matière sèche d'une larve d'insecte.

### Figures

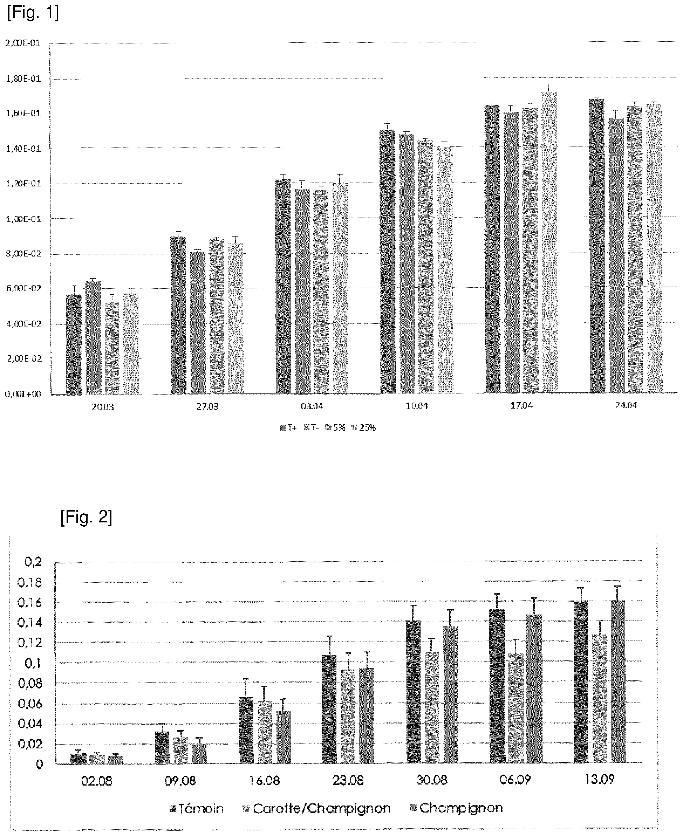

La [Fig. 1] représente le poids moyen larvaire en fonction de la date pour des groupes de 30 larves de ténébrion nourries avec du son de blé et 5% en masse de levure de bière (T+), du son de blé seul (T-), du son de blé et 5% en masse de champignon sec (5%), et du son de blé mélangé à 25% de champignon sec (25%) ;
La [Fig. 2] représente le poids moyen larvaire en fonction du temps (date) pour des lots de 30 larves de ténébrion nourries avec de la carotte fraîche (témoin), un mélange de carotte fraîche et de champignon frais et avec du champignon ;

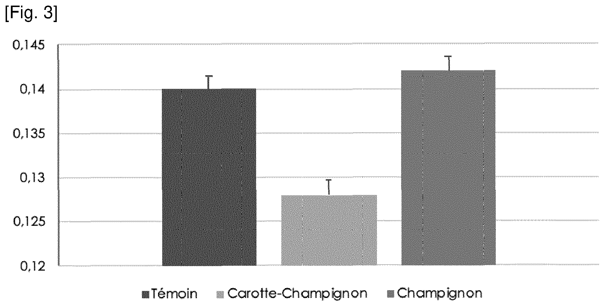

La [Fig. 3] représente les masses moyennes obtenues pour un groupe de nymphes nourries depuis leur stade larvaire avec du son de blé (témoin), un groupe de nymphes nourries avec du son de blé et un mélange de carotte fraiche et de champignon frais et un groupe de nymphes nourries avec du son de blé et du champignon frais

### Définitions

Le terme « champignon aérien » désigne le sporophore d'un macromycète. Ce sporophore peut se présenter sous la forme d'un pied surmonté d'un chapeau ou sous une autre forme.

Le terme « céréale » englobe au sens de la présente invention, le maïs, le blé, le riz, les mils tels que le millet et le sorgho, notamment, l'orge, l'avoine, les plantes de la famille des *Graminées,* des *Polygonacées* telles que le sarrasin, des *Amaranthacées* telles que le quinoa et l'amarante, des *Pédaliacées* telles que le sésame et des *Lamiacées* telles que le chia.

Les termes « champignon frais » désigne un champignon ou un morceau de champignon qui contient plus de 80% d'eau et notamment 90% ou plus d'eau et en particulier 95% ou plus d'eau. Le champignon frais peut avoir, par exemple, une activité de l'eau Aw supérieure à 0,80 et en particulier supérieure à 0,85 et notamment égale ou supérieure à 0,90 ou 0,95.

Les termes « champignon sec » désigne un champignon qui présente une activité de l'eau égale ou inférieure à 0,80, en particulier égale ou supérieure à 0,50 ou égale ou supérieure à 0,7 et inférieure à 0,80. Les termes « champignon sec » désignent en particulier un champignon qui est à l'équilibre avec l'atmosphère environnante, c'est-à-dire un champignon qui présente une activité de l'eau égale à l'humidité relative de l'air environnant le champignon.

### EXEMPLES

Dans l'exemple présenté ci-dessous, l'insecte est le ténébrion meunier (*tenebrio molitor*)*.*

Tous les insectes quel que soit leur stade de développement sont contenus dans des bacs d'élevage de dimensions 60x40cm. Le mode de stockage dépend du stade de développement. Les nymphes sont stockées sur des roll-conteneurs ou en palettes (60x40cm). Les adultes reproducteurs sont stockés en palette (80x120cm) et se reproduisent durant 3 à 5 semaines.

Les larves en grossissement sont stockées sur des palettes (80x120cm). Le grossissement dure 8 à 12 semaines. Les larves sont abattues un âge égal ou supérieur à 10 semaines et égal ou inférieur à 16 semaines.

Conditions d'élevage : Les deux salles (grossissement et reproduction) ont des conditions abiotiques contrôlées. La salle de grossissement est à une température comprise entre 23 et 28°C et une humidité relative de 50% à 70%.La salle de reproduction est à une température comprise entre 20 et 25°C et à une humidité relative de 50% à 80%.

Les étapes de l'élevage sont réparties sur une semaine.

Jour 1 : On effectue le tri entre les nymphes, les larves adultes et le substrat à l'aide d'un tamis spécifique. Les adultes reproducteurs contenus dans le panier de ponte sont ensuite déposés dans un nouveau bac contenant une fine couche de son de blé pour une nouvelle semaine de ponte. On dépose également un grammage donné de nymphes récupérées du jour dans les nouveaux paniers de ponte afin d'obtenir une densité larvaire contrôlée et optimale pour la croissance. On procède ensuite au nourrissage des nymphes et des reproducteurs et au nourrissage des larves en grossissement.

Chaque étape de tri, nourrissage et changement de panier nécessite le déstockage et restockage des bacs de leur unité de rangement.

Jour 2 : Gestion de la densité des larves une semaine avant leur sortie en production ou reproduction. Les larves ont été, au préalable, nourries afin qu'il ne reste plus aucun substrat d'élevage pour faciliter le tri. Chaque classe d'âge, de la même semaine, est trié afin de retirer les déjections et les exuvies. Tous les bacs de la même classe d'âge sont mis en commun. Parmi ces larves, 5 à 10% sont placés dans des bacs à une densité précise pour permettre une bonne transformation en nymphes. Tous ces bacs sont nourris grassement afin que les larves puissent prendre le plus possible en masse larvaire

### Jour 5 Nourrissage des larves

Nourrissage des nymphes et des reproducteurs.

Alimentation utilisée pour le nourrissage : la nourriture utilisée pour le nourrissage des insectes, quel que soit son stade de développement est constituée de son de blé (gros son de blé) et de champignon de Paris.

On notera que les œufs ne sont jamais en contact avec le champignon de Paris. Pour les larves, le champignon de Paris est découpé et servi en morceaux.

Les larves-nymphes sont, au début de la nymphaison, nourries avec un mélange de son de blé et de champignon ; le champignon est sous forme d'allumettes pour garantir la bonne distribution de l'aliment à toutes les larves qui doivent effectuer leur transformation.

Lorsque les adultes et les nymphes deviennent majoritaires, le champignon est donné entiers pour faire durer l'apport d'humidité dans le temps. En effet, du fait d'un rapport surface/volume plus important il y a moins de perte d'humidité sur un champignon entier qu'en allumettes, et cela a tout son intérêt pour les adultes qui ne sont pas capables d'absorber l'humidité ambiante comme les larves. Les adultes « reproducteurs » présents dans les paniers de ponte sont nourris avec du son de blé et des champignons de paris entiers pour ces mêmes raisons.

### composition de la larve nourrie au champignon et performances zootechniques associées

### 1. Analyses nutritionnelles des larves

A titre de comparaison, des insectes à divers stade de leur développement ont été nourris avec un mélange de son de blé et de carotte fraîche et avec un mélange de son de blé, de carotte fraiche et de champignon frais plus un groupe nourri avec du son de blé et du champignon frais.

Le même protocole que celui décrit ci-dessus a été mis en œuvre pour les trois types de nourriture. Les quantités de carotte, champignon et carotte+champignon distribuées sont identiques.

Les larves sont ensuite abattues par le froid : elles sont soumises à une température de -30°C pendant plus de 5 heures.

Le Tableau 1 suivant regroupe les résultats obtenus.

**[Tableau 1]**

| | Larves nourries avec du champignon | Larves nourries avec de la carotte |
|---|---|---|
| Matières sèches sous vide (g/100g) | 43,7 | 40,5 |
| Cendres (g/100g) | 2,38 | 2,71 |
| Protéines (%Nx6,25) (g/100g) | 19,8 | 20,3 |
| Matières grasses totales (g/100g) | 14,3 | 15,5 |

Les méthodes analytiques utilisées sont celles définies dans l'arrêté du 8 septembre 1977 relatif aux méthodes officielles d'analyse des produits diététiques et de régime. On constate au vu des résultats du tableau 1 que les larves qui consomment du champignon frais contiennent moins d'eau, un peu moins de protéines et de matières grasses mais plus de matière sèche que celles consommant de la carotte fraîche.

### Etude de l'effet de la présence de champignon dans la nourriture sur le développement des insectes

### A)Stade larvaire avec champignon séché

Un groupe de larves de ténébrion ont été nourries avec du son de blé et de la levure de bière (5%) (groupe T+), un autre groupe a été nourri avec du son de blé uniquement (groupe T-), un autre groupe a été nourri avec un mélange de son de blé et de champignon séché contenant 5% en masse de champignon séché (Aw du champignon séché = 0,5- 0,8 ; 0,5 et 0,8 compris) (groupe 5%) et un dernier groupe a été nourri avec un mélange de son de blé et de champignon séché contenant 25% en masse de champignon séché (même Aw que précité) (groupe 25%). Les larves de chaque groupe sont pesées régulièrement.

Les résultats sont visibles sur la Fig. 1. En abscisse on trouve la date et en ordonnée le poids moyen larvaire sur un groupe de 30 larves issues du même groupe. Le poids moyen est calculé sur trois essais.

Au vu des résultats de la Fig. 1, on constate que l'ajout de champignon augmente la masse larvaire par rapport au groupe nourri seulement avec du son de blé. L'augmentation de la masse larvaire dans le cas des groupes nourris avec du champignon est similaire à celle obtenue avec l'implémentation en levure de bière. Le champignon augmente donc de manière significative la croissance larvaire.

### B)comparaison son de blé + carotte/ son de blé + carotte +champignon/ son de blé + champignon

### stade larvaire

On a mesuré la variation de la masse larvaire en fonction du temps de trois groupes de larves de ténébrion. Un groupe est nourri avec de la carotte fraîche et du son de blé (groupe témoin), un groupe est nourri avec un mélange de son de blé, de carotte fraîche et de champignon frais et un troisième groupe est nourri avec un mélange de champignon frais et de son de blé. On mesure à chaque date indiquée en abscisse la masse de 30 larves de chaque groupe.

Les résultats sont regroupés sur la Fig. 2. Au vu des résultats de la Fig. 2, on constate que la croissance larvaire est moindre pour le groupe nourri avec un mélange de carotte et de champignon frais du fait de l'excès d'humidité, probablement laquelle favorise l'apparition de levures et champignons.

### Stade nymphe et adulte

Les mêmes expérimentations que récitées ont été conduites sur des insectes au stade de nymphe et au stade adulte. Les résultats pour les nymphes sont visibles sur la Fig. 3. Au vu de la Fig. 3, on constate que la masse d'insectes obtenue après 5 semaines de nourrissage est plus élevée dans le cas du groupe nourri avec un apport de champignon frais (0,143 g) que dans le cas du groupe nourri avec de la carotte (0,140 g) et bien plus élevé que la masse des nymphes nourries avec le mélange carotte/champignon (0,127g).

Pour les adultes, on obtient une masse de 0,12g pour le groupe nourri avec le mélange contenant de la carotte, 0,117g pour le groupe nourri avec le mélange carotte+ champignon et 0,138 g pour le groupe nourri avec du champignon frais. Ces résultats indiquent que l'apport de champignon sec ou frais favorise la croissance des larves, celle des nymphes et celles des adultes, ce qui présuppose que les adultes auront de meilleures performances de survie et de meilleures performances reproductives.

### Analyse nutritionnelle des larves nourries avec un mélange de son de blé et de champignon et abattues par la vapeur

Un volume de larves nourries avec un mélange de champignon (40-60 %en masse) et de son de blé a été abattu par la vapeur. Les larves abattues sont refroidies à 10°C puis congelées à -30°C. Elles sont stockées à -20°C pendant 78 jours avant leur analyse. Les résultats relatifs à la composition des larves sont regroupés dans le tableau 2 ci-dessous.

**[Tableau 2]**

| | |
|---|---|
| Valeur énergétique (kcal/100g) | 181 |
| Protéines (g/100g)/ Azote total (g/100g) | 21,0 (±0,7)/ 3,36 (±0,12) |
| Glucides totaux(g/100g)/ glucides assimilables (g/100g) | 4,4 /4,4 |
| Lipides (g/100g) | 8,9 (±0,7) |
| Cendres (g/100g) | 1,35 (±0,18) |
| Humidité (g/100g) | 64,4 (±0,7) |
| Aw | 0,975 |

Le calcul de la valeur énergétique est mis en œuvre selon le règlement UE n° 1169/2011. Le taux de protéines est calculé à partir du dosage par titrimétrie de l'azote par la méthode Kjeldahl. La teneur en glucides est calculée en faisant la différence avec les autres teneurs, la teneur en lipides est déterminée par gravimétrie au micro-ondes. L'échantillon est hydrolysé puis une extraction est effectuée grâce à d'acide sulfurique et de cyclohexane via la technique du micro-onde. La matière grasse est ensuite déterminée par pesée après évaporation du cyclohexane. Le taux de cendres est déterminé par thermogravimétrie à 550°C pendant 4 heures. Le taux d'humidité est déterminé par thermogravimétrie à 70°C.

L'activité de l'eau (Aw) a été mesurée selon une méthode interne MMIT 033B adaptée de la norme NF ISO 18787 : 2017. La détermination de l'activité de l'eau (Aw) s'effectue sur le produit entier décongelé.

### Fabrication d'un aliment humide de type pâté destiné au chat

Les larves nourries avec un mélange son de blé champignon (50% de champignon) abattues et surgelées (-20°C ou -30°C) et conservées à -20°C sont utilisées non décongelées pour fabriquer une préparation alimentaire humide de type pâté. Dans le cas présent, cette préparation humide est destinée au chat ; il s'agit donc d'une pâtée pour chat.

La méthode de fabrication de la préparation alimentaire humide est la suivante.

On mixe des grains de sorgho avec un mixeur/hachoir de cuisine. On prémélange la poudre de sorgho ainsi obtenue avec de la levure de bière, un appétent (contenant un sucre) et un mélange vitaminé avec un cutter Stephan 500 tours/min pendant 30 secondes, à 20°C. On ajoute les larves non décongelées, l'eau, les carottes et les pommes surgelées. On réduit en purée et on mélange le tout avec un Cutter Stephan 3000 tours/min pendant 1 à 2 minutes. La température du mélange est entre 0 et 2°C. On remplit des boîtes métalliques format ¼ basse avec le mélange obtenu. Les couvercles métalliques (munis d'un opercule ouvrage facile, sans utilisation d'ouvre-boîte) sont sertis sur les boîtes. Les boîtes sont ensuite passées dans un autoclave vertical de marque Brouillon, sur le programme 3 pendant 1h47. Pendant 24 minutes au moins, les boîtes sont soumises à une température de 127°C qui assure leur stérilisation et la cuisson des ingrédients.

La composition de la pâtée est indiquée dans le tableau 3 qui suit.

**[Tableau 3]**

| Ingrédients | Fournisseur | g pour 100g de produit fini |
|---|---|---|
| Larves surgelées/congelées | Fungfeed | 62,0 |
| Eau | / | 28,8 |
| Sorgho grain | Loos aliments | 4,0 |
| Carottes surgelées | METRO | 3,0 |
| Pommes surgelées | METRO | 2,0 |
| Levure de bière | Gerblé | 0,2 |
| Appétent | | 2,0 |
| mélange vitaminé | | 1,0 |

Le passage à l'autoclave permet d'obtenir une stérilisation de la composition alimentaire contenue dans les boîtes. Le pH de toutes les préparations s'est avéré stable (pH = 6,1-6,4 bornes incluses). Les pâtées peuvent être conservées deux ans. La pâtée obtenue est ensuite comparée avec des pâtées en boîte du commerce. Les résultats sont regroupés dans le tableau 4 qui suit.

**[Tableau 4]**

| | Invention | Commerce 1 | Commerce 2 |
|---|---|---|---|
| Composition | larve de ténébrion meunier, eau, sorgho, carotte, pomme, levure de bière, hydrolysat de protéines végétale, sels minéraux | viandes et sous-produits animaux, poissons et sous-produits de poissons, substances minérales | viandes et sous-produits animaux, céréales, extraits de protéines végétales, substances minérales, sous-produits d'origines végétales, huile et graisse, levures, sucres |
| Taux analytiques en % | Protéine : 13,2 | Protéine : 9 | Protéine : 12 |
| | MG : 9,4 | MG : 5,5 | MG:4 |
| | Cellulose : 0,3 | Cellulose : 0,2 | Cellulose : 0,9 |
| | Cendres : 2 | Cendres : 2 | Cendres : 1,8 |
| | Humidité : 75 | Humidité : 80 | Humidité : 78 |
| Nombres ingrédients | 8 | 3-5 | 9-10 |

On constate au vu du Tableau 4 que le taux de protéine de la pâtée selon l'invention est plus élevé que celui des deux autres produits et ce avec une seule source de protéine animale. La teneur plus importante en eau de la pâtée de l'invention provient de la teneur en eau de la larve ; cette teneur en eau permet une optimisation de la texture de la pâtée laquelle peut être tranchée au couteau et est donc facile à donner à un animal.

Par ailleurs, les matières grasses animales de la pâtée de l'invention proviennent en majorité des larves. Elles sont donc en majorité constituées d'oméga 3, 6 ou 9. Ces acides gras essentiels sont utiles pour le chat et le chien et aident à prévenir l'inflammation, les problèmes de peau, de démangeaisons et les poils secs.

## Revendications

1. Nourriture pour larves d'insectes et insectes, **caractérisée en ce qu'**elle contient du champignon aérien et éventuellement une matière sèche.

2. Nourriture selon la revendication 1, **caractérisé en ce que** ledit champignon aérien présente une activité de l'eau supérieure ou égale à 0,50, en particulier égale ou supérieure à 0,70 ou 0,80 et plus particulièrement égale ou supérieure à 0,85 et notamment égale ou supérieure à 0,90 ou 0,95 et se trouve entier ou à l'état divisé.

3. Nourriture selon la revendication 1 ou 2, **caractérisé en ce que** ladite matière sèche est choisie parmi les fragments ou brisures d'au moins une céréale, les drêches fraîches, fermentées ou déshydratées, en particulier les drêches de brasserie, les issues de céréales, les coproduits issus de la transformation des céréales tels que par exemple, la farine, les miettes de pain, de gâteau ou de biscuit, le son d'au moins une céréale, en particulier le son d'avoine, le son de blé et les mélanges d'au moins deux desdites matières sèches.

4. Méthode d'élevage/nourrissage d'insectes et de larves d'insectes, **caractérisée en ce que** l'on nourrit les larves et/ou lesdits insectes avec une nourriture selon l'une quelconque des revendications 1 à 3 et **en ce que** l'atmosphère entourant lesdites larves et/ou lesdits insectes présente une humidité relative égale ou supérieure à 50% et égale ou inférieure à 70% ou 80%.

5. Larve d'insecte entière ou en morceaux **caractérisée en ce qu'**elle contient au moins 42% de matière sèche, plus particulièrement au moins 43% de matière sèche et présente un pourcentage massique de protéines par rapport à la matière sèche égal ou supérieur 40% et égal ou inférieur à 75% et/ou **en ce qu'**elle présente une densité égale ou supérieure à 295 et égale ou inférieure à 325 et/ou une activité de l'eau égale ou supérieure à 0,960 et égale ou inférieure à 0,981 et/ou une valeur énergétique inférieure ou égale à 210 kcal/100g et/ou une teneur en glucides supérieure ou égale à 4,0 g/100g et/ou une teneur en lipides inférieure ou égale à 10g/100g et/ou une teneur en protéines inférieure ou égale à 22g/100g.

6. Larve d'insecte selon la revendication 5, **caractérisée en ce qu'**elle a été abattue par le froid ou par traitement à la vapeur puis congélation et **en ce qu'**elle est conservée congelée.

7. Procédé de fabrication d'un aliment **caractérisé en ce que** l'on réduit en morceaux des larves surgelées/congelées selon l'une des revendications 5 et 6 et **en ce que** l'on mélange lesdits morceaux avec une composition alimentaire laquelle contient une farine d'au moins une céréale et/ou au moins un fruit et/ou au moins un légume, notamment au moins un fruit et/ou au moins un légume surgelé(s) et **en ce que** l'on fait cuire ledit mélange.

8. Aliment sec ou humide obtenu après cuisson/stérilisation, **caractérisé en ce qu'**il contient des larves selon l'une des revendications 5 et 6 et au moins un fruit et/ou au moins un légume et/ou au moins une céréale.

9. Aliment selon la revendication 8, **caractérisé en ce qu'**il est humide et **en ce qu'**il contient au moins 7% en masse et en particulier au moins 13% en masse de protéines.

10. Aliment selon la revendication 8 ou 9 **caractérisé en ce qu'**il contient pour unique source de protéines animales lesdites larves.
